# EUROPÄISCHE PATENTSCHRIFT

(11) **EP 0 402 492 B1**
(45) Veröffentlichungstag und Bekanntmachung des Hinweises auf die Patenterteilung: **29.12.1993**
(21) Anmeldenummer: 89110600.7
(22) Anmeldetag: 12.06.1989
(51) Int. Cl.: G03B 42/04

(54) **Röntgenfilmmagazin**
X-ray film magazine
Magasin de pellicules radiographiques

(43) Veröffentlichungstag der Anmeldung: 19.12.1990
(73) Patentinhaber: SIEMENS AKTIENGESELLSCHAFT, 80333 München (DE)
(72) Erfinder: Björk, Erik, S-113 54 Stockholm (SE); Wiklund, Ola, S-175 76 Järfälla (SE)

(56) Entgegenhaltungen:
- EP-A- 0 025 390
- DE-A- 2 022 103
- FR-A- 2 499 530

## Beschreibung

Die Erfindung betrifft ein Röntgenfilmmagazin zur Aufnahme eines Stapels von Röntgenfilmblättern in annähernd c-förmig gebogenem Zustand, bestehend aus einem Gehäuse mit einem Deckel, die gemeinsam einen annähernd quaderförmigen Innenraum bilden, wobei die Innenwand des Deckels mit einem Haltekeil zur Lagerung der einen Endseite des Stapels versehen ist, und wobei im Gehäuseinneren Mittel zur Lagerung der anderen Endseite des Stapels vorhanden sind.

In der EP-A-0 025 390 ist ein Röntgenfilmmagazin dieser Art beschrieben. Dieses Röntgenfilmmagazin ist mit einem gebogenen Blech versehen, an dem der Filmstapel anliegen soll. Durch den Haltekeil bleibt der Filmstapel in der erwähnten gespannten gebogenen Form liegen. Die Filmblätter erhalten hierdurch eine Elastizität, die erforderlich ist damit jedes einzelne Filmblatt, das durch eine Trennvorrichtung vom Stapel getrennt wird, zum Teil aus dem Magazin herausspringen kann. Das herausragende Teil des Filmblattes wird danach von einer Transportvorrichtung ergriffen, die das Filmblatt zu einer Aufnahmeposition weiterbefördert. Bei diesem Röntgenfilmmagazin ist die Elastizität desjenigen Filmblattes, das zuerst aus dem Magazin heraustransportiert wird höher als die Elastizität der Filmbätter die zuletzt heraustransportiert werden, da die Verbiegung der letzten Filmbätter kleiner ist als die Verbiegung des zuerst herauszutransportierenden Filmblattes. Dies kann dazu führen, daß die zuletzt herauszutransportierenden Blätter nicht genügend Elastizität aufweisen, um aus eigener Kraft ausreichend weit aus dem Röntgenfilmmagazin herauszuspringen.

Ein weiteres Röntgenfilmmagazin ist in der US-A 4,447,053 beschrieben. In dessen Gehäuse ist eine Schraube zum Trennen der Filmblätter etwa mittig in dem C-förmigen Querschnitt angebracht. Beim Heraustransportieren der Filmblätter wird die Schraube derart gedreht, daß die Filmblätter von Gewindegang zu Gewindegang eine kürzere Strecke einnehmen, so daß das Filmblatt, welches die kürzeste Strecke einnimmt, aus einer Öffnung des Gehäuses herausragt. Der herausragende Teil des Filmblattes wird danach von einer Transportvorrichtung ergriffen, die das Filmblatt zur Aufnahmeposition weiterbefördert.

Der Erfindung liegt die Aufgabe zugrunde, ein Röntgenfilmmagazin der eingangs genannten Art dahingehend auszubilden, daß jedes aus dem Magazin herauszutransportierende Filmblatt eines Stapels in einfacher und Herstellungsmäßig billiger Weise eine derartige Form bzw. Lage einnimmt, daß eine Weiterbeförderung dieses Filmblattes sicher gewährleistet ist. Ferner soll die Ladung des Röntgenfilmmagazines einfach und rasch erfolgen können.

Diese Aufgabe ist erfindungsgmäß dadurch gelöst, daß die Mittel zur Lagerung der anderen Endseite eine Endplatte aufweisen, die in dem dem Deckel gegenüberliegenden Bereich der Bodenplatte angeordnet ist, und daß im Gehäuseinneren eine Folie angeordnet ist, deren erstes Ende am Gehäuse im Bereich der Endplatte befestigt ist, und deren zweites, gegenüberliegendes Ende mit Zugfedern mit dem Deckel im Bereich des Haltekeils derart verbunden ist, daß ein zwischen der Endplatte und dem Haltekeil eingelegter Stapel von Röntgenfilmblättern von der Folie in annähernd C-förmig gebogenem Zustand gehalten wird. Durch die federnd angebrachte Folie, die eine billige und einfache Stütze für die geladenen Filmblätter darstellt, erhält immer das oberste Filmblatt eines Filmstapels eine Lage, in der das Filmblatt weitertransportiert werden kann. Außerdem kann durch die Folie eine Paketladung vorgenommen werden, d.h., ein Stapel Filmblätter kann in das Röntgenfilmmagazin gelegt werden.

In einer vorteilhaften Weiterbildung der Erfindung wird vorgeschlagen, daß mindestens ein mit dem Deckel verbundenes keilförmiges Teil vorgesehen ist, das das federnd verbundene Ende der Folie bei sich vermindernder Anzahl von Röntgenfilmblättern zum Gehäuseinneren verschiebt. Dadurch ist erreicht, daß sich das zu transportierende Filmblatt, unabhängig von der Anzahl Filmblätter im Stapel, immer in einer Lage befindet, in der es weitertransportiert werden kann. Außerdem wird erreicht, daß die Folie bei Abnahme der geladenen Filmblätter dem letzten Filmblatt im Stapel genau folgt und dieses formt.

Die Erfindung ist nachfolgend anhand eines in den Zeichnungen dargestellten Ausführungsbeispiels näher erläutert. Es zeigen:
- FIG 1: eine perspektivische Ansicht eines Röntgenfilmmagazines mit einer Vereinzelungsvorrichtung für Filmblätter nach der Erfindung;
- FIG 2: eine Seitenansicht des Röntgenfilmmagazines nach FIG 1;
- FIG 3: eine Seitenansicht eines Vereinzelungsteiles des Röntgenfilmmagazines nach den FIG 1 und 2;
- FIG 4: eine perspektivische Ansicht des Röntgenfilmmagazines nach den FIG 1 und 2 mit einer Entnahmevorrichtung für Filmblätter;
- FIG 5, 6: Draufsichten der Entnahmevorrichtung nach FIG 4 und
- FIG 7: eine Seitenansicht eines Deckels für das Röntgenfilmmagazin nach FIG 1, 2 und 4.

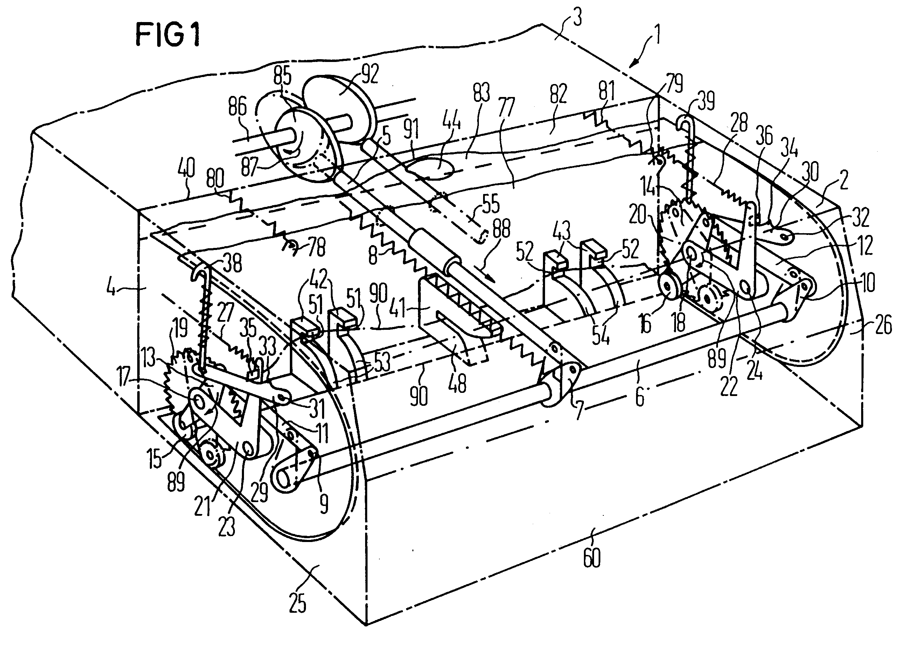

In der FIG 1 ist ein Teil eines Röntgenfilmwechslers (1) gezeigt mit einem Röntgenfilmmagazin (2), das an eine Aufnahmeeinheit (3) angeschlossen ist. Das Röntgenfilmmagazin (2) ist derart ausgebildet, daß Röntgenfilmblätter in diesem C-förmig gelagert werden. Das Röntgenfilmmagazin (2) weist eine Vereinzelungsvorrichtung auf, die mit einer Stange (5) versehen ist, welche durch die Wandung (4) zwischen Röntgenfilmmagazin (2) und Aufnahmeeinheit (3) hindurchragt. Die Stange (5) ist an einem Ende über einen Verbindungsarm (7) gelenkig mit einer Welle (6) verbunden, die quer zur Längsrichtung der Stange (5) angeordnet ist. Der Verbindungsarm (7) und die Welle (6) sind starr miteinander verbunden. Zwischen dem Verbindungsarm (7) und der Wandung (4) ist eine Zugfeder (8) angebracht. Die Welle (6) weist ferner an beiden Enden jeweils einen weiteren Verbindungsarm (9,10) auf, der über eine Anordnung, bestehend aus Stange (11;12) und Hebelarm (13;14) mit einer Rolle (15;16) verbunden ist. Die Hebelarme (13,14) sind um Achsen (17,18) schwenkbar gelagert. Außerdem sind um dieselben Achsen (17,18) drehbare Zahnräder (19,20) angeordnet. Die Hebelarme (13,14) sind derart dimensioniert, daß der Abstand von den Achsen (17,18) bis zum Ende der Rollen (15,16) größer ist als der Radius der Transporträder (19,20). Die Rollen (15,16) ragen somit geringfügig über die Zahnräder (19,20) hinaus, so daß die Rollen (15,16) bei einer bestimmten Lage der Hebelarme (13,14) die Zahnräder (19,20) von ihren Auflageflächen abheben.

Die Achsen (17,18) der Zahnräder (19,20) sind ferner jeweils an einen winkelförmigen Hebel (21,22) gelagert. Die Hebel (21,22) sind um weitere Achsen (23,24), die in den stirnseitigen Wandungen (25,26) des Röntgenfilmmagazines (2) befestigt sind, schwenkbar gelagert. Das freie Ende jedes Hebels (21,22) ist über Zugfedern (27,28) mit der Wandung (4) des Röntgenfilmmagazines (2) verbunden. Das Röntgenfilmmagazin (2) beinhaltet darüberhinaus ein Vereinzelungsteil (41) für die Röntgenfilmblätter und auf jeder Seite des Vereinzelungsteiles (41) jeweils zwei dicht nebeneinander angeordnete Gleitklötze (42,43). Das Vereinzelungsteil (41) und die Gleitklötze (42,43) werden später näher beschrieben.

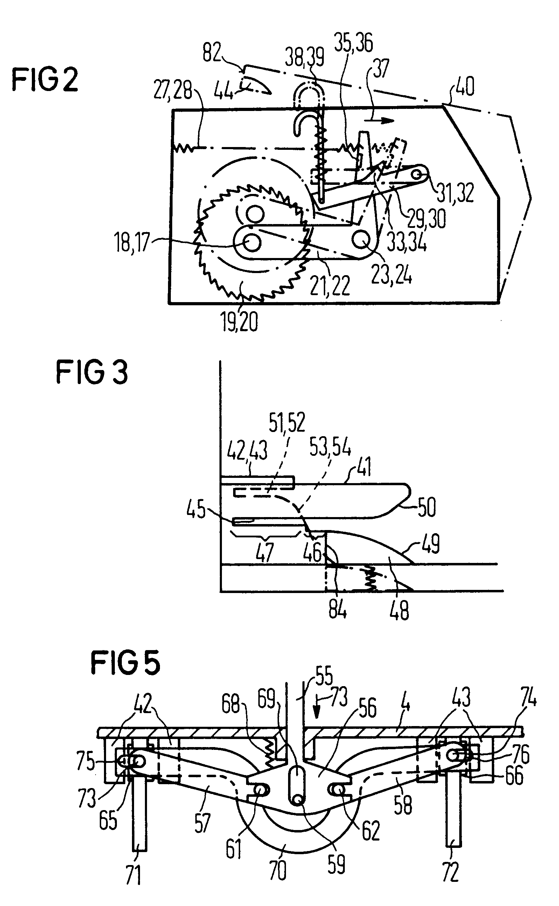

In der FIG 2 ist dargestellt, daß die Zahnräder (19,20) durch Drehen der Hebel (21,22) um die Achsen (23,24) nach oben geschwenkt werden können. Die Hebel (21,22) sind in ihren oberen, hier punktgestrichelt dargestellten Lagen durch Schloßbleche (29,30) arretierbar. Dies erfolgt, indem die Schloßbleche (29,30), die um Wellen (31,32) drehbar gelagert sind, Anschläge (33,34) aufweisen, in denen eine jedem Hebel (21,22) zugeordnete vorstehende Platte (35,36) beim Ziehen der federbelasteten Hebel (21,22) in Richtung des Pfeiles (37) einrastet. An dem freien Ende jedes Schloßbleches (29,30) ist ein federbelasteter Stift (38,39) befestigt, der über die Wandungen (25,26) des Röntgenfilmmagazines (2) hinausragt, wenn das Schloßblech (29,30) sich in eine Einrastlage - strichpunktiert gezeigt - für den Hebel (21,22) befindet.

In der Figur ist ferner ein Deckel (40) für das Röntgenfilmmagazin (2) in offener Lage gezeigt. Beim Schließen des Deckels (40) werden die federbelasteten Stifte (38,39) heruntergedrückt. Gleichzeitig werden die Schloßbleche (29,30) derart um ihre Achsen (31,32) geschwenkt, daß die Anschläge (33,34) von den Platten (35,36) der Hebel (21,22) ausrasten, wobei die Zahnräder (19,20) in ihre ursprünglichen Lagen zurückschnappen. Der Deckel (40) weist außerdem einen Haltekeil (44) auf. Wenn der Deckel (40) geschlossen ist, ragt der Haltekeil (44) in das Röntgenfilmmagazin (2) hinein. In dieser FIG 2 ist anschaulichkeitshalber lediglich die Schwenkung der Zahnräder (19,20) bzw. der winkelförmigen Hebel (21,22) sowie deren Arretierung dargestellt.

Aus der FIG 3 ist ersichtlich, daß das Vereinzelungsteil (41) einen Spalt (45) aufweist, dessen Tiefe in zwei unterschiedlich ausgebildeten Strecken (46,47) unterteilt ist. Der Spalt (45) weist auf der Strecke (46) eine lichte Höhe auf, die geringfügig größer ist als die Stärke zweier Röntgenfilmblätter. Die lichte Höhe des Spaltes (45) auf der Strecke (47) entspricht der Stärke eines einzigen Röntgenfilmblattes.

Als Verlängerung des Spaltes (45) ist ein keilförmiges Gleitstück (48) vorgesehen, das federnd bis zur Bodenplatte (60) heruntergedrückt werden kann. Das Gleitstück (48) weist eine Gleitfläche (49) für die Röntgenfilmblätter auf. Dieser gegenüber befindet sich eine weitere Gleitfläche (50) für die Röntgenfilmblätter. In dieser Figur ist ferner einer der Gleitklötze (42,43), z.B. der Gleitklotz (43) dargestellt. Die Gleitklötze (42,43) weisen Spalte (51,52) auf, die im Verhältnis zum Spalt (45) des Vereinzelungsteiles (41) von der Bodenplatte (60) des Röntgenfilmmagazines (2) gemessen höher angebracht sind. Die Gleitklötze (42,43) besitzen außerdem Gleitflächen (53,54) für die Röntgenfilmblätter.

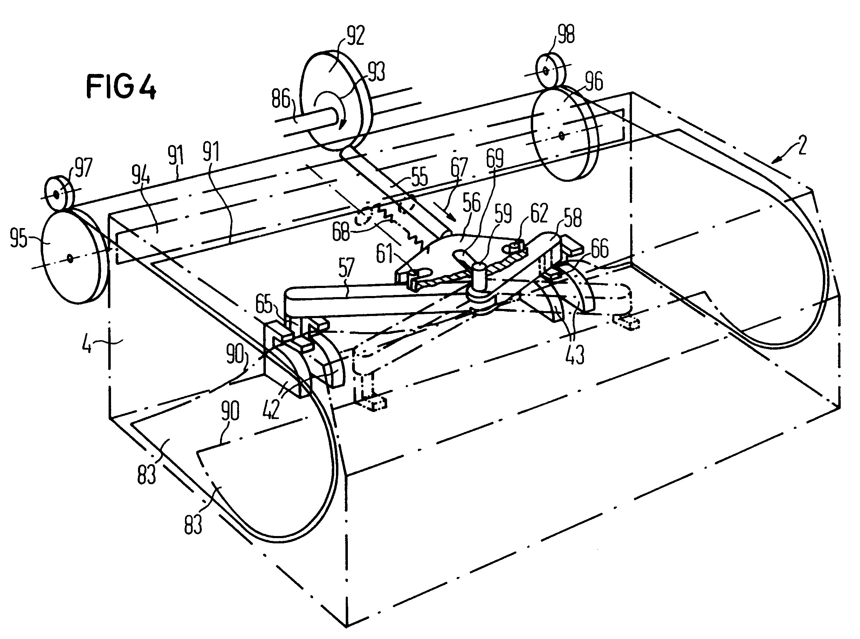

In der FIG 4 ist eine mit der in der FIG 1 gezeigten Vereinzelungsvorrichtung für Röntgenfilmblätter wechselweise arbeitende Entnahmevorrichtung für dieselben gezeigt. Die erwähnten Vorrichtungen sind in dem selben Röntgenfilmmagazin angeordnet. Wegen der Veranschaulichkeit werden die Vorrichtungen getrennt voneinander beschrieben.

Die Entnahmevorrichtung weist eine Stange (55) auf, an deren einem Ende ein Schieber (56) für zwei Schwenkarme (57,58) angeschlossen ist. Zur Verdeutlichung des Aufbaus der Schwenkarme (57,58) ist der Schieber (56) teilweise gebrochen dargestellt. Die Schwenkarme (57,58) sind um eine im Raum fest und zur Bodenplatte (60) senkrecht liegende Welle (59) drehbar gelagert. Jeder Schwenkarm (57,58) weist einen nach oben ragenden Zapfen (61,62) auf, der jeweils in einer Ausnehmung (63,64) des Schiebers liegt. An dem freien Ende jedes Schwenkarmes (57,58) ist ein Haken (65,66) befestigt. In der einen Lage der Schwenkarme (57,58), die als Parklage bezeichnet werden kann, liegen der Haken (65) zwischen den Gleitklötzen (42) und der Haken (66) zwischen den Gleitklötzen (43). Die Höhe der Haken (65,66), von der Bodenplatte (60) gemessen, entspricht der der Spalte (51,52) in den Gleitklötzen (42,43). Beim Verschieben des Schiebers (56) in Richtung des Pfeiles (67) werden die Schwenkarme (57,58) durch Verschieben der Zapfen (61,62) in die strichpunktierte Lage gebracht.

Durch eine Zugfeder (68), die einerseits an dem Schieber (56) und andererseits an der Wandung (4) des Röntgenfilmmagazines (2) befestigt ist, kehrt der Schieber (56) mit den Schwenkarmen (57,58) in seine ursprüngliche Lage zurück. Eine Nut (69) ermöglicht, daß der Schieber (56) trotz der starren Welle (59) vor- und rückwärts bewegt werden kann.

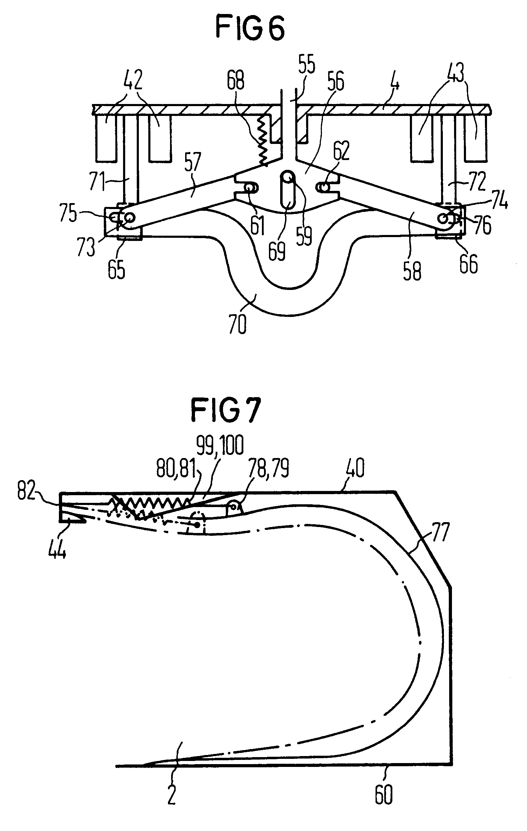

In der FIG 5 ist die Parklage der Entnahmevorrichtung dargestellt. Damit die Schwenkarme (57,58) und dadurch auch die Haken (65,66) parallel und linear verschoben werden, sind die Schwenkarme an ein "omega"-förmiges Lineal (70) angeschlossen, dessen Enden an jeweils einer rohrförmigen Schiene (71,72) verschiebbar angebracht sind. Die Schwenkarme (57,58) sind dabei über Zapfen (73,74), die in Nuten (75,76) des Lineals (70) eingreifen, mit diesem verbunden. Beim Verschieben der Stange (55) bzw. des Schiebers (56) in Richtung des Pfeiles (67) werden die Schwenkarme (57,58) mit dem Lineal (70) entlang der Schienen (71,72) verschoben, bis sie die in der FIG 6 gezeigte Lage einnehmen.

In der FIG 7 ist dargestellt, daß im Röntgenfilmmagazin (2) eine Folie (77) vorgesehen ist, die etwa die Größe eines Röntgenfilmblattes besitzt. Die Folie (77), die eine C-Bogenform beschreibt, ist einerseits an der Bodenplatte (60) und andererseits über Halterungen (78,79) und Zugfedern (80,81) an der Kante (82) am freien Ende des Deckels (40) befestigt.

Die Folie (77) dient dazu, die unterschiedlichen Biegungsradien der C-förmig gelagerten Röntgenfilmblätter, d.h., von einem Stapel zusammengefaßter Filmblätter bis hin zu einem Filmblatt, auszugleichen. Dabei stützt die Folie (77) immer das jeweils unterste Filmblatt ab. Die äußere durchgezogene Linie stellt die Lage der Folie (77) dar, wenn das Röntgenfilmmagazin (2) mit Filmblättern voll geladen ist. Dabei sind die Zugfedern (80,81) weit auseinandergezogen. Wenn bei einer Aufnahmeserie der Röntgenfilmstapel nach und nach dünner wird, ziehen die Zugfedern (80,81) nach, damit immer das unterste Filmblatt des Stapels durch die Folie (77) abgestützt wird. Als Führung für die Halterungen (78,79) der Folie (77) dienen zwei auf jeder Seite des Haltekeils (44) und mit dem Deckel (40) verbundene keilförmige Teile (99,100). Die strichpunktierte Darstellung soll die Lage der Folie (77) bzw. die Lage der Zugfedern (80,81) zeigen, wenn ein einziges Filmblatt übrig ist.

Bevor das Röntgenfilmmagazin (2) mit einem Stapel von Röntgenfilmblättern geladen wird - in den Figuren wird lediglich ein Filmblatt (83) gezeigt - werden zunächst die Zahnräder (19,20), wie es in FIG 2 gezeigt ist, in die obere Lage geschwenkt und in dieser Lage arretiert. Der Filmstapel wird zunächst zwischen der Bodenplatte (60) und den Zahnrädern (19,20) bis zum Vereinzelungsteil (41) geführt. Die vordere Kante des Filmstapels wird danach derart zwischen die Gleitflächen (49) und (50) geschoben, daß das Gleitstück (48), wie es in der FIG 3 dargestellt ist, heruntergedrückt wird. Die vordere Kante des Filmstapels erreicht nun eine Endplatte (84). Der Filmstapel wird auf die Folie (77) gelegt und die der vorderen Kante (90) gegenüberliegende Kante (91) des Filmblattes (83) wird zwischen den Haltekeil (44) und den Deckel (40) hineingeschoben. Der Deckel (40) wird geschlossen, wobei die Stifte (38,39) heruntergedrückt werden, so daß die Zahnräder (19,20) aus ihren oberen Lagen ausrasten und sich gegen die Oberfläche des obersten Filmblattes (83) des Filmstapels legen (FIG 2). Dadurch, daß die Transportrader (19,20) durch die Zugfedern (27,28) federbelastet sind, wird eine Kraft in Richtung auf den Stapel auf diese ausgeübt.

Die Vereinzelungsvorrichtung wird über das in der FIG 1 dargestellte parallelogrammähnliche Gelenksystem (6,7,9 bis 14) mittels einer in der Aufnahmeeinheit (3) des Röntgenfilmwechslers (1) angeordneten Exzenterscheibe (85) gesteuert. Dies erfolgt, indem die Exzenterscheibe (85) die Stange (5) in deren axialer Richtung verschiebt. In der in der FIG 1 gezeigten strichpunktierten Lage der Exzenterscheibe (85) steuert die Stange (5) über den Verbindungsarm (7), die Welle (6), den weiteren Verbindungsarm (9,10), die Stangen (11,12), die Hebelarme (13,14) und die Rollen (15,16) derart, daß sie die Oberfläche des Filmblattes (83) nicht berühren, wie es die ebenfalls strichpunktierte Lage dieser Rollen zeigt. Beim Drehen der Exzenterscheibe (85) um deren Achse (86) in Richtung des Pfeiles (87) wird die Stange (5) in Richtung des Pfeiles (88) verschoben und beeinflußt das erwähnte Gelenksystem (6,7,9 bis 14) derart, daß die Rollen (15,16) um die Wellen (17,18) in Richtung der Pfeile (89) geschwenkt werden. Gleichzeitig werden die Zahnräder (19, 20) durch die beschriebene Schwenkung der Rollen (15,16) in dieselbe Richtung gedreht.

Die Zahnräder (19,20) greifen das oberste Filmblatt (83), das damit in den Spalt (45) des Vereinzelungsteiles (41) hineintransportiert wird. Ein unter dem Filmblatt (83) liegendes, hier nicht dargestelltes Filmblatt eines Filmstapels, das wegen Friktion eventuell mittransportiert wird, bleibt am Ende der Strecke (46) des Spaltes (45), wie in der FIG 3 beschrieben, stehen. Die Zahnräder (19,20) werden solange um die Achsen (17,18) gedreht, bis das Filmblatt (83) das Ende der Strecke (47) des Spaltes (45) erreicht hat. Das Filmblatt (83), das nunmehr von dem Filmstapel getrennt ist, gleitet gleichzeitig auf den Gleitflächen (53,54) der Gleitklötze (42,43) in deren Spalt (51,52) hinein. Dadurch, daß die Spalte (51,52) der Gleitklötze (42,43) höher angebracht sind als die Spalte (45) des Vereinzelungsteiles (41), erhält die hier eingeschobene Kante (90) des Filmblattes (83) eine in der FIG 1 strichpunktierte gezeigte Wellenform.

Durch den Transport des Filmblattes (83) in die beschriebene Richtung rastet dessen gegenüberliegende Kante (91) aus dem Griff des Haltekeils (44) aus. In der zuletzt erwähnten Position der Zahnräder (19,20) haben die Rollen (15,16), die in der FIG 1 gezeigte Lage erreicht, in der sie die Zahnräder (19,20) etwas von ihren Anliegeflächen abheben.

Die in der FIG 4 gezeigte Entnahmevorrichtung wird mittels einer weiteren, auf derselben Achse (86) wie die Exzenterscheibe (85) angebrachten Exzenterscheibe (92) angetrieben. In der in dieser FIG dargestellten Parklage der Entnahmevorrichtung umgreifen die Haken (65,66) der Schwenkarme (57,58) die Kante (90) des Filmblattes (83). Durch Drehen der Exzenterscheibe (92) um die Achse (86) in Richtung des Pfeiles (93) wird die Stange (55) bzw. die Schieber (56), wie beschrieben, in Richtung des Pfeiles (67) verschoben. Der Schieber (56) betätigt über die Zapfen (61,62) die Schwenkarme (57,58) und gleichzeitig die Haken (65,66) derart, daß das Filmblatt (83) bis zu deren strichpunktierter Lage transportiert wird.

Die Rollen (15,16), die auf der Oberfläche des Filmblattes (83) aufliegen, rollen beim Filmtransport mit. Das Filmblatt (83) wird zunächst durch einen in der Wandung (4) des Röntgenfilmmagazines (2) vorhandenen Schlitz (94) hindurchtransportiert und erreicht eine in der Aufnahmeeinheit (3) vorhandene Transporteinrichtung, bestehend aus Transportrollen (95,96) und Andruckrollen (97,98), die das Filmblatt (83) in die Aufnahmeeinheit weitertransportieren.

Durch Weiterdrehen der Exzenterscheibe (92) gehen die Schwenkarme (57,58) bzw. die Haken (65,66) in ihre Parklage zurück. Die Vereinzelungsvorrichtung wird durch Drehen der Exzenterscheibe (85) so beeinflußt, daß die Rollen (15,16) über das parallelogrammähnliche Gelenksystem (6,7,9 bis 14) wieder in die ursprüngliche Lage geschwenkt werden. Jedes Zahnrad (19,20) ist mit einer Freilaufnabe (101) versehen. Dadurch drehen sich die Zahnräder (19,20) lediglich in der bereits beschriebenen Richtung. Beim Zurückschwenken der Rollen (15,16) in die ursprüngliche Lage drehen sich die Zahnräder (19,20) nicht mit, sondern legen sich wieder auf die Oberfläche des nächsten obersten Filmblattes des Filmstapels.

Der beschriebene Verlauf, d.h., das wechselweise Arbeiten zwischen der Vereinzelungs- und der Entnahmevorrichtung wiederholt sich bis zum letzten im Röntgenfilmmagazin geladenen Röntgenfilmblatt oder bis der Verlauf durch den Operateur unterbrochen wird.

### Bezugszeichenliste

- 1: Röntgenfilmwechsler
- 2: Röntgenfilmmagazin
- 3: Aufnahmeeinheit
- 4,25,26: Wandung
- 5,11,12,55: Stange; Gelenksystem
- 6,31,32,59: Welle; Gelenksystem
- 7,9,10: Verbindungsarm; Gelenksystem
- 8,27,28,68,80,81: Zugfeder
- 13,14: Hebelarm; Gelenksystem
- 15,16: Rolle
- 17,18,23,24,31,32,86: Achse
- 19,20: Zahnrad; Transportrad
- 21,22: Hebel
- 29,30: Schloßblech
- 33,34: Anschlag
- 35,36: Platte
- 37,67,87,88,89,93: Pfeil
- 38,39: Stift
- 40: Deckel
- 41: Vereinzelungsteil
- 42,43: Gleitklotz
- 44: Haltekeil
- 45,51,52: Spalt
- 46,47: Strecke
- 48: Gleitstück
- 49,50,53,54: Gleitfläche
- 56: Schieber
- 57,58: Schwenkarme
- 60: Bodenplatte; Gehäuse
- 61,62,73,74: Zapfen
- 63,64: Ausnehmung
- 65,66: Haken
- 69,75,76: Nut
- 70: Lineal
- 71,72: Schiene
- 77: Folie
- 78,79: Halterung
- 82,90,91: Kante
- 83: Filmblatt
- 84: Endplatte
- 85,92: Exzenterscheibe
- 94: Schlitz
- 95,96: Transportrollen
- 97,98: Andruckrollen
- 99,100: Keilförmiger Teil
- 101: Freilaufnabe

## Patentansprüche

1. Röntgenfilmmagazin (2) zur Aufnahme eines Stapels von Röntgenfilmblättern in annähernd C-förmig gebogenem Zustand, bestehend aus einem Gehäuse (60) mit einem Deckel (40), die gemeinsam einen annähernd quaderförmigen Innenraum bilden, wobei die Innenwand des Deckels (40) mit einem Haltekeil (44) zur Lagerung der einen Endseite des Stapels versehen ist, und wobei im Gehäuseinneren Mittel zur Lagerung der anderen Endseite des Stapels vorhanden sind, **dadurch gekennzeichnet,**
a) daß die Mittel zur Lagerung der anderen Endseite eine Endplatte (84) aufweisen, die in dem dem Deckel gegenüberliegenden Bereich der Bodenplatte angeordnet ist, und
b) daß im Gehäuseinneren eine Folie (77) angeordnet ist, deren erstes Ende am Gehäuse (60) im Bereich der Endplatte (84) befestigt ist, und deren zweites, gegenüberliegendes Ende mit Zugfedern mit dem Deckel (40) im Bereich des Haltekeils (44) derart verbunden ist, daß ein zwischen der Endplatte und dem Haltekeil eingelegter Stapel von Röntgenfilmblättern von der Folie in annähernd C-förmig gebogenem Zustand gehalten wird.

2. Röntgenfilmmagazin nach Anspruch 1, **dadurch gekennzeichnet,** daß mindestens ein mit dem Deckel (40) verbundenes keilförmiges Teil (99,100) vorgesehen ist, das das federnd verbundene Ende der Folie (77) bei sich vermindernder Anzahl von Röntgenfilmblättern zum Gehäuseinneren verschiebt.

## Claims

1. X-ray film magazine (2) to receive a stack of X-ray film sheets in a condition bent in an approximately C-shaped configuration, comprising a housing (60) together with a cover (40), which jointly form an approximately parallelepipedic inner space, the inner wall of the cover (40) being provided with a retaining wedge (44) for supporting one of the end faces of the stack, and means for supporting the other end face of the stack being provided in the interior of the housing, characterized in that
a) the means for supporting the other end face exhibit an end plate (84) which is disposed in that region of the baseplate which is opposite to the cover, and
b) in the interior of the housing there is disposed a foil (77), the first end of which is secured to the housing (60) in the region of the end plate (84), and the second, opposite end of which is connected by tension springs to the cover (40) in the region of the retaining wedge (44) in such a manner that a stack of X-ray film sheets which is inserted between the end plate and the retaining wedge is retained by the foil in a condition bent in an approximately C-shaped configuration.

2. X-ray film magazine according to Claim 1, characterized in that at least one wedge-shaped part (99, 100) connected to the cover (40) is provided, which part displaces the resiliently connected end of the foil (77) towards the interior of the housing as the number of X-ray film sheets decreases.

## Revendications

1. Magasin (2) pour film radiographique destiné à recevoir une pile de feuilles de film radiographique, dans un état recourbé approximativement en forme de C, constitué par un boîtier (60) comportant un couvercle (40), ces deux éléments formant en commun un espace intérieur de forme approximativement parallélépipédique, et dans lequel la paroi intérieure du couvercle (40) est pourvue d'un coin de retenue (44) servant à supporter un côté d'extrémité de la pile, et dans lequel des moyens pour supporter l'autre côté d'extrémité de la pile sont présents à l'intérieur du boîtier, caractérisé par le fait
a) que les moyens de support de l'autre côté d'extrémité comprennent une plaque d'extrémité (84), qui est disposée au voisinage de la plaque de fond, qui est située à l'opposé du couvercle, et
b) qu'à l'intérieur du boîtier est disposée une feuille (77), dont une première extrémité est fixée au boîtier (60), au voisinage de la plaque d'extrémité (84), et dont la seconde extrémité opposée est racordée par des ressorts de traction, au couvercle (40) au voisinage du coin de retenue (44) de sorte qu'une pile de feuilles de film radiographique, qui est insérée entre la plaque d'extrémité et le coin de retenue, est retenue par la feuille dans un état approximativement recourbé en forme de C.

2. Magasin pour film radiographique suivant la revendication 1, caractérisé par le fait qu'il est prévu au moins une partie en forme de coin (99,100), qui est raccordée au couvercle (40) et qui déplace l'extrémité, qui est raccordée de façon élastique, de la feuille (77) en direction de l'intérieur du boîtier, lorsque le nombre des feuilles de film radiographique diminue.
